# EUROPEAN PATENT APPLICATION

(11) **EP 2 413 376 A1**
(43) Date of publication of application: **01.02.2012**
(21) Application number: 10188104.3
(22) Date of filing: 19.10.2010
(51) Int. Cl.: H01L 31/042

(54) **A mounting system supporting slidable installation of a plurality of solar panels as a unit**

(30) Priority: 29.07.2010 US 846621
(71) Applicant: First Solar, Inc., Perrysburg, OH 43551 (US)
(72) Inventor: Bellacicco, John, Stamford, CT 07950 (US); Hartelius, John, Brick, NJ 08724 (US); Cabuhay, Henry, Morris Plains, NJ 07950 (US); Kuster, Tom, Clinton, NJ 08809 (US); Monaco, Michael, Stanhope, NJ 07874 (US); Perkins, Martin, Fountain Hills, AZ 85268 (US)
(74) Representative: Roberts, Gwilym Vaughan

(57) **Abstract**

A solar panel mounting system that supports field installation of solar panels. The system comprises a carrier for holding a plurality of individual solar panels together as a unit and an attachment structure on the carrier for mounting the carrier to a support structure The support structure may comprise a plurality of spaced parallel rails. The carrier can be slidably mounted to the spaced parallel rails using the attachment structure provided on the carrier.

## Description

### FIELD OF THE INVENTION

Embodiments of the invention relate to the field of photovoltaic (PV) power generation systems, and more particularly to a system for simplifying installation of solar panels, also known as PV modules, in large-scale arrays.

### BACKGROUND OF THE INVENTION

Photovoltaic power generation systems are currently constructed by installing a foundation system (typically a series of posts or footings), a module structural support frame (typically brackets, tables or rails, and clips), and then mounting individual solar panels to the support frame. The solar panels are then grouped electrically together into PV strings, which are fed to an electric harness. The harness conveys electric power generated by the solar panels to an aggregation point and onward to electrical inverters.

Prior art commercial scale PV systems such as this must be installed by moving equipment, materials, and labor along array rows to mount solar panels on the support frames one-at-a-time. This is a time-consuming process, which becomes increasingly inefficient with larger scale systems.

With innovations in PV cell efficiency quickly making PV-generated energy more cost-effective, demand for large-scale PV systems installations is growing. Such systems may have a row length of half a mile or more. Accordingly, a simplified system for solar panel installation is needed.

### BRIEF DESCRIPTION OF THE DRAWINGS

FIG. 1 is a perspective view showing a carrier for mounting a plurality of solar panels in a first embodiment.

FIG. 2 is a close-up perspective view showing a recessed area in the carrier.

FIGs. 3A-3B are close-up perspective views showing solar panels mounted in the carrier.

FIG. 3C is a cross-sectional side view showing a solar panel mounted in the carrier.

FIG. 4 is a top-down view showing a schematic of the electrical wiring in the carrier

FIG. 5 is a perspective view showing attachment structures on the underside of the carrier.

FIGs 6A-6B are perspective views, respectively showing different arrangements for mounting the carrier to spaced parallel support rails.

FIG. 7 is a cross-sectional side view showing one embodiment of an attachment structure for mounting the carrier to a support rail.

FIG. 8 is a perspective view showing another embodiment of an attachment structure for mounting the carrier to a support rail.

FIG. 9 is a cross-sectional side view showing another embodiment of an attachment structure for mounting the carrier to a support rail.

FIG. 10A is a top-down view showing another embodiment of carrier.

FIGS. 10B-C are a side view and cross-sectional side view of the carrier along axes A and B, as shown in FIG. 10A.

FIG. 11 is a perspective view showing another embodiment of an attachment structure for mounting a carrier to parallel support rails.

FIG. 12 is a side view showing the attachment structure of FIG. 11 for mounting a carrier to parallel support rails provided on a folding table.

FIG. 13 is a close-up cross-sectional side view of the attachment structure of FIG. 11.

FIG. 14 is a perspective view of another embodiment of a carrier.

FIG. 15 is a perspective view of a carrier being mounted to support rails on a roof structure.

### DETAILED DESCRIPTION OF THE INVENTION

In the following detailed description, reference is made to the accompanying drawings which form a part hereof, and which illustrate specific embodiments of the invention. These embodiments are described in sufficient detail to enable those of ordinary skill in the art to make and use them. It is also understood that structural, logical, or procedural changes may be made to the specific embodiments disclosed herein.

Described herein is a mounting system that supports simplified installation of solar panels. The system maximizes the use of preassembled components, minimizes material movement logistics, and reduces both on-site field labor and equipment movement over the site. One embodiment of the system is constructed by installing a support structure comprising a plurality of spaced parallel rails, which may be ground or structure supported, are designed to slidably accept a pre-assembled carrier supporting a plurality of solar panels as a unit.

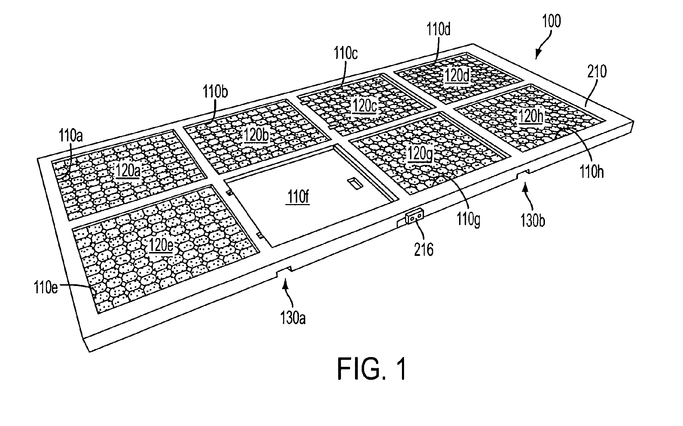

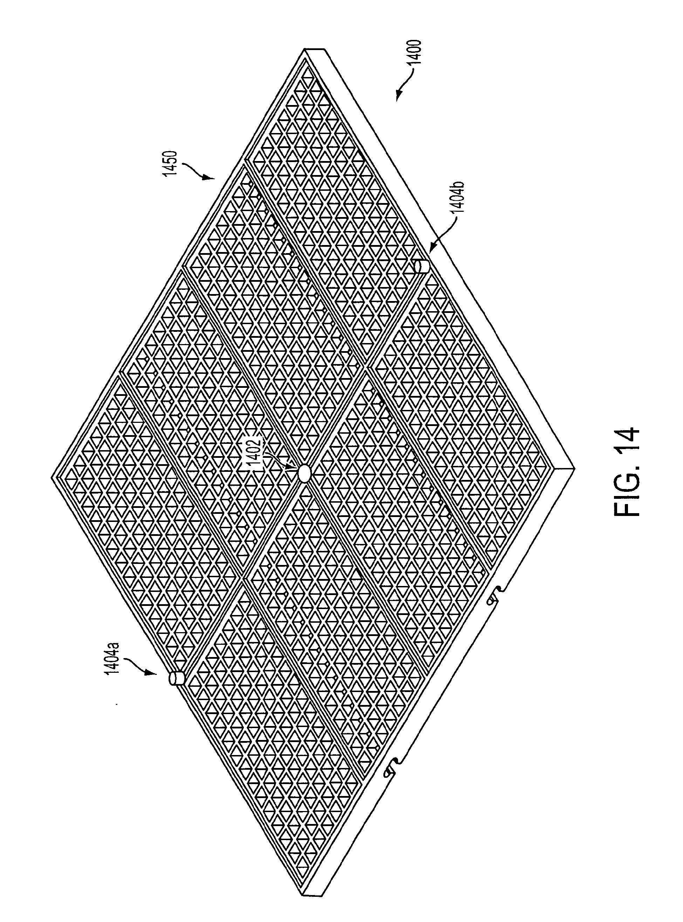

A first embodiment of a carrier 100 is depicted in FIGs. 1, 2, 3, 4 and 5. The carrier 100 is a lightweight, cartridge-like structure that provides structural support and contains and supports a plurality of solar panels 120a-h in a 4 x 2 array and enables their electrical connections. The carrier 100 is made of either synthetic or natural structural material, including, but not limited to, aluminum, rolled steel, or other metals and plastics. As an alternative, and as shown by element 1400 in FIG. 14, the carrier 1400 can be constructed in a honeycombed or gridded structure. This saves weight while maintaining structural strength.

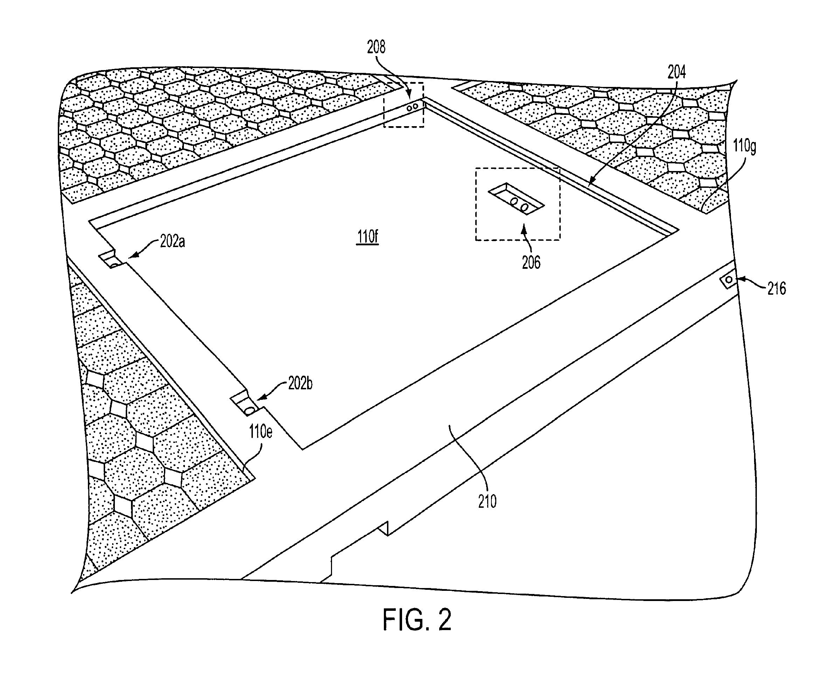

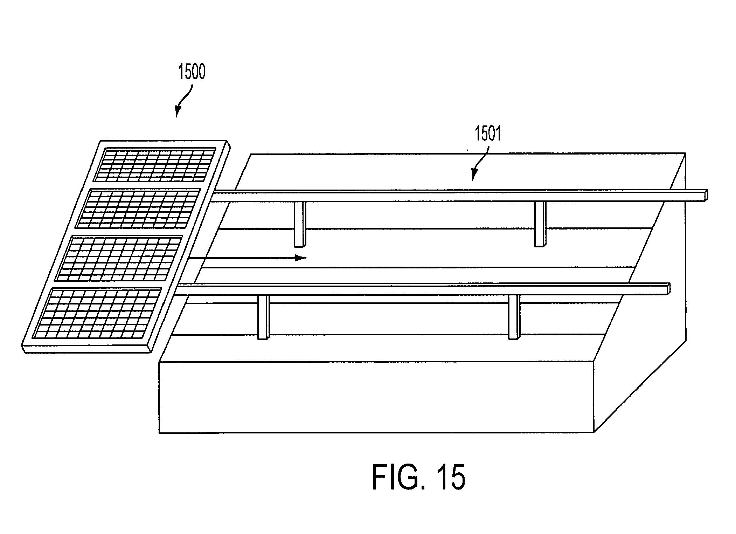

As shown in more detail in FIGs. 1, 2 and 3A-3B, a plurality of solar panels 120a-h are mounted in respective recessed areas 110a-h of carrier 100, with one such recessed area 110f being shown without an installed solar panel in FIG. 2. Solar panels 120a-h are held in place by being snapped, clipped, or otherwise securely seated in each of the recessed areas 110a-h. The solar panels 120a-h are preferably mounted in the recesses 110a-h before conveyance of a carrier to an installation site, so all that needs to be done at the installation site is to mount the carrier 100 containing a plurality of solar panels to a support structure. Although an array of eight solar panels 120a-h in a 4 x 2 array is shown in the Figures as being supported by carrier 100, it is understood that any number or arrangement of a plurality solar panels could be mounted on and supported by a carrier 100. For instance, FIG. 15 shows a 4 x 1 array of solar panels.

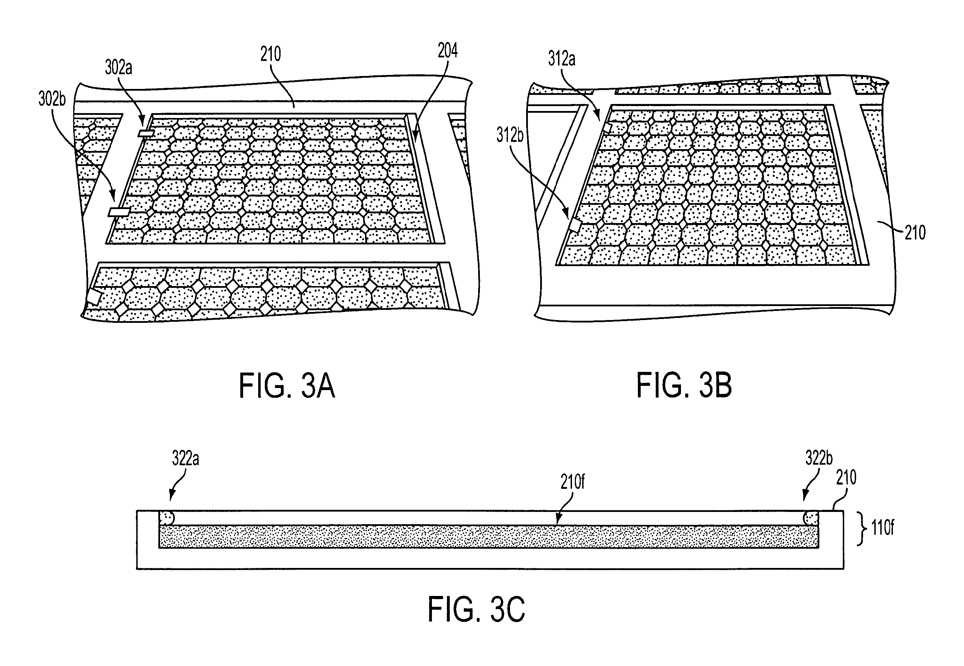

Figures 2 and 3A show one embodiment of an arrangement for mounting solar panels in the recessed areas 110a-h of carrier 100. One edge of a solar panel, *e.g.*, 210f (not shown) is slid under a lip groove 204 within recessed area 110f and lowered into position. To secure a solar panel in place, clips 302a-b which engage with an opposite edge of a solar panel are themselves engaged by screws or other fasteners with openings 202a-b provided on a side of the recess 110f opposite the side containing lip groove 204. Together with lip groove 204, clips 302a and 302b hold a solar panel in place within a recess. An alternate embodiment for securing the solar panels in the recesses is shown in Figure 3B, which uses spring-back clips 312a-b that overhang an edge of the recess. As one edge of a solar panel is slid under a lip groove 204 in a recess, it is then lowered into position, causing the opposite edge to press against the spring-back clips 312a-b, which push back and bend until the solar panel clears the bottom of the clips. Once clear, the clips 312a-b will slide back over top of the solar panel, securing it in place.

Clips and grooves are not the only way solar panels can be mounted in recesses of the carrier 100; glue, Velcro™, or other known engagement means can be used. In another embodiment for securing the solar panels to the recesses, resilient engagement members can be used to hold the panels in place. FIG. 3C, for instance, shows a pair of rubber stoppers 322a-b at opposite ends of a recessed area 110f which allow panel 210f to be slid under one of the stoppers 322a and then pressed down past the other stopper 322b to be held in place. The carrier 100 is preferably configured so that whichever structure are used to hold a solar panel within a recess is used, solar panels 120a-h are either flush with or below a top surface 210 of the carrier 100. This allows the carrier 100 to be stacked with like carriers for shipping and also protects the solar panels 120a-h while in storage or transit to an installation site.

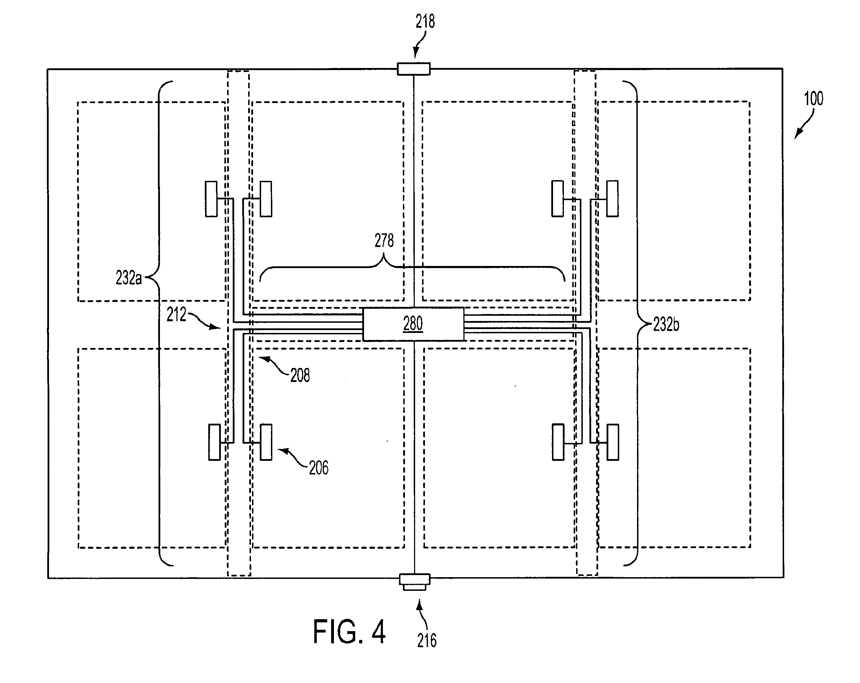

In general, solar-generated electricity is harvested and transmitted through a prewired common bus or cable system integral to the carrier 100. Some examples of a common bus system that may be employed are described in more detail in co-pending Application Serial No. 12/ entitled "APPARATUS FACILITATING WIRING OF MULTIPLE SOLAR PANELS" by John Bellacicco and Siddika Pasi. (attorney docket no. F4500.1004/P1004), the disclosure of which is incorporated by reference herein. One embodiment of pre-wiring a carrier 100 for connection to a common bus system 280 is schematically shown in Figures 2 and 4. As shown in Figure 2, an electrical connector 206 can be provided in the lower surface of the recessed area 110f so that when a solar panel is placed in a recessed area 110f, a plug on the bottom of a solar panel engages electrical connector 206 to connect it to the common bus system 280. Figure 2 also shows an electrical connector 208 provided in a sidewall of the recess 110f that could be used in lieu of connector 206 to connect wiring 212 to side electrical connectors on a solar panel. An exemplary electrical connection schematic for a carrier 100 is shown in Figure 4.

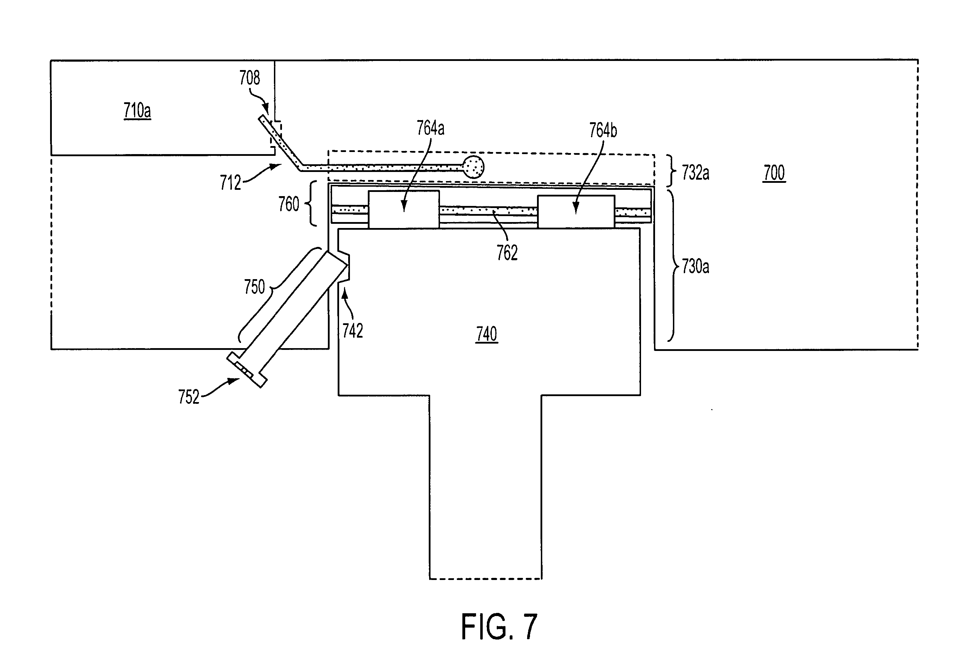

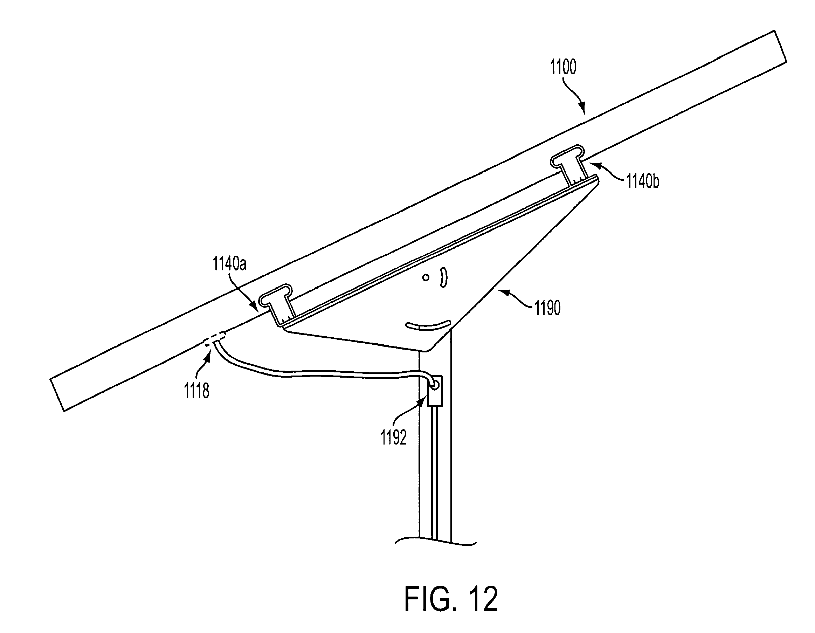

As shown in Figure 4, the wiring 212 for a carrier 100 runs from the electrical connectors 206 in each recessed area 110a-h into channels 232a-b provided in carrier 100 which run above each attachment area 130a-b (a similar channel 732a is also shown in Figure 7). Each of the channels 232a-b is connected to a transverse central channel 278 which runs through carrier 100, which houses the common bus system 280. The wiring 212 connects electrical connectors 206, and thus the solar panel engaged in each recess 110a-h to the common bus system 280. Although the common bus system 280 in each carrier 100 can be terminated at an electric harvester on a carrier 100 support structure, such as is shown in Figure 12, Figure 4 shows an embodiment where each carrier 100 can be equipped with a male electrical connector 216 and female electrical connector 218 for interconnecting the common bus systems 280 of multiple carriers 100, together. In this manner, as the carriers 100 are slid into position on a support structure in the manner discussed in more detail below and pressed against each other, corresponding male 216 and female 218 connectors engage to electrically connect the solar panels of adjacent carriers 100. Interconnected carriers 100 can then transfer electric power to a common point and onward to an electrical inverter before connecting to an electrical grid.

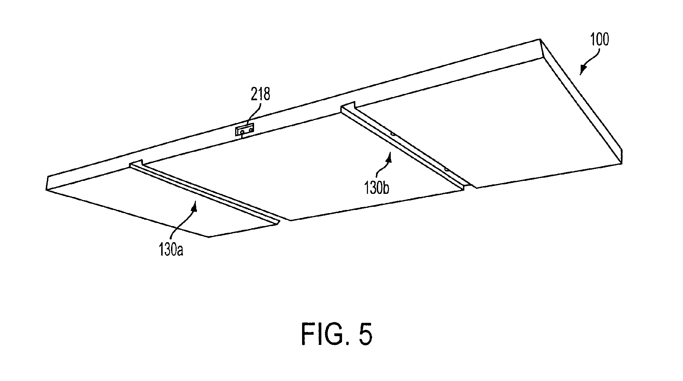

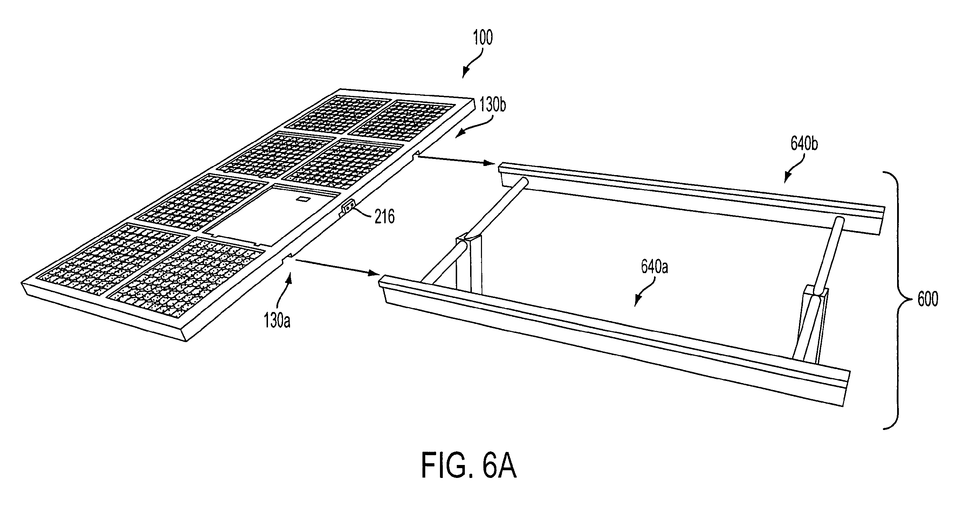

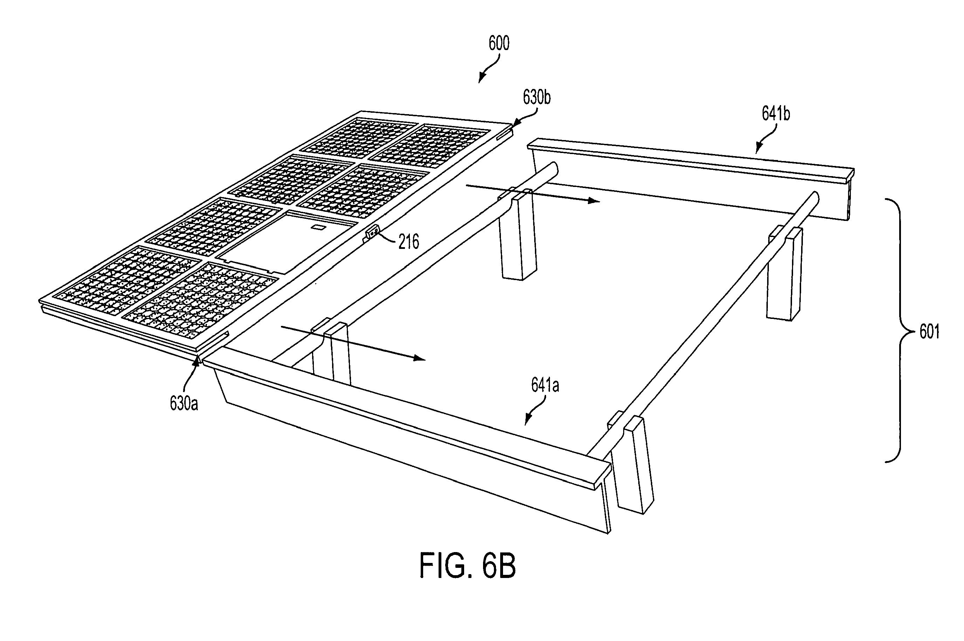

As shown in Figures 1 and 5, each carrier 100 has attachment structures 130a-b in the form of grooves on the carrier underside to seat the carriers 100 on support structures. Figure 6A shows an exemplary carrier 100 with its attachment structures 130a-b being slidably mounted on a support structure 600 comprising a set of spaced parallel rails 640a-b. Figures 1, 5 and 6A show that for carrier 100, the attachment structures 130a-b are on the under side of the carrier 100. Figure 6B shows an alternate embodiment of a carrier 600 where the attachment structures are provided in the form of slots 630a-b on side edges of the carrier 600, which are mounted on and engage with a support structure 601 that also comprises a set of spaced parallel rails 641a-b.

In each of the FIG. 6A and 6B embodiments, a carrier 100, 600 can be slid onto the rails 640a, 640b or 641a, 641b (FIG. 6B) for mounting in the field. Thus, successive carriers 100, each containing a plurality of solar panels, are slid onto the rails (FIGs. 6A and 6B) one after another resulting in considerably reduced field installation time. In addition, adjacent carriers 100, 600 can be electrically connected to one another by mating male and female electrically connectors 216, 218.

As mentioned above, row length in large-scale PV systems can be half a mile or more. In order to easily slide carriers along such a long path, as shown in FIG. 7, carrier 700 may use a roller truck 760 mounted within the attachment structure 730a, which facilitates easier sliding movement across long stretches of rail 740. FIG. 7 also shows a channel 732a above attachment structure 730a, for routing wiring 712 to an electrical connector 708 in a corresponding recessed area 710a.

The truck 760 comprises a plurality of paired spaced rollers 764a-b mounted on a corresponding axle 762. The truck 760 only takes up a small portion of space inside the attachment structure 760a, so that a rail 740, which may have a T or other cross-sectional shape, can extend far enough in the attachment structures 730a-b to stabilize the carrier 700. Once a carrier 700 is slid into position on the rails 740, it can be secured to the rails 740 by extending a set screw 752 (in channel 750) or other fastener to engage a groove 742 in the rail 740. Advantageously, the set screw 752 also functions as an electrical ground, if made of conductive material, grounding a conductive carrier 700, to a conductive rail 740.

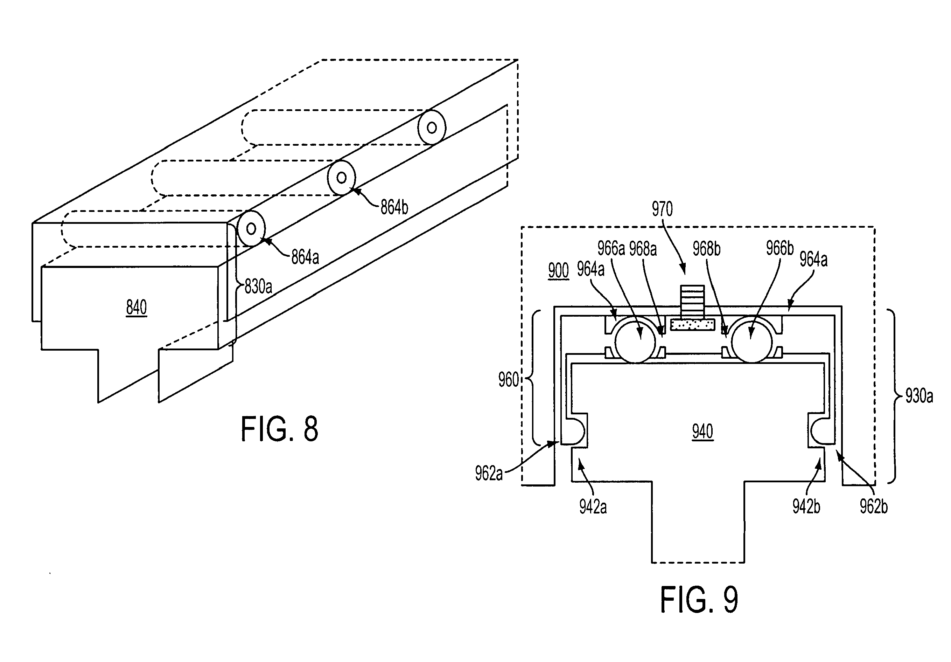

Although, as shown in FIG. 7, truck 760 may use multiple equally spaced rollers 764a-b, a truck could also use any sliding movement assisting structure, including a single roller on an axle (such as the rollers 864a-b in Figure 8) or ball bearings (such as bearings 766a-b in Figure 9). Generally, the trucks 760 are manufactured separately from the carriers 700 and are mounted in the attachment structures 730a-b by screw, bolt, glue, or other fastener. However, the trucks 760 could also be integral to the attachment structures, and, as shown in the alternate embodiment of Figure 8, rollers 864a-b could be installed directly inside attachment structure 830a. Referring back to FIGs. 1, 5 and 6A, the attachment structures 130a-b or 630a-b can take the form of simple grooves, and a non-stick, or low friction slidable surface such as a Teflon®-coated surface can be applied within the grooves instead of using a truck 760 to facilitate sliding movement of a carrier.

Figure 9 shows an alternate embodiment of a carrier 900 having a truck 960 which comprises a plurality of paired spaced ball bearings 966a-b, which are mounted in upper and lower housings 964a-b and 968a-b respectively. Truck 960 also has a pair of arms 962a-b that extend to engage corresponding grooves 942a-b in a support rail 940. Though only shown in this embodiment, it should be understood that any truck 760, 960 could use such arms 962a-b which engage the corresponding grooves 942a-b in the support rail. The Figure 9 truck 960 is secured to attachment structure 930a by means of screw 970 or other fastener, which is driven through a top surface of the attachment structure 930a into the body of carrier 900. Other trucks that may be employed are described in more detail in co-pending Application Serial No. , (Attorney Docket no. F4500.1005, entitled APPARATUS FACILITATING MOUNTING OF SOLAR PANELS TO A RAIL ASSEMBLY, to John Bellacicco, John Hartelius, Henry Cabuhay, Tom Kuster, Michael Monaco and Kyle Kazimir), filed concurrently with this application, the entire disclosure of which is incorporated herein by reference.

A plurality of carriers may be stacked together and shipped to an installation site. For this reason, the carriers, *e.g*., 100, 600, 700, 800, 900, 1000, 1100 and 1400 are generally designed to lie flat or fit together vertically and are configured to protect the solar panels in transit, and the trucks, *e.g*., 760, 960 are designed to be completely contained flush or preferably entirely within the attachment structures. In addition, as noted above, the solar panels are preferably recessed in the carriers 100, 600, 700, 800, 900, 1000, 1100 and 1400. Optionally, as is shown in FIG. 14, a carrier 1400 can have one or more openings 1402 so that when carriers are stacked, a threaded securing member (not shown) can be inserted in opening 1402 and topped with bolts to ensure the carriers remain secure in place during transit. Carrier 1400 may also have a plurality of protrusions 1404a, 1404b to engage corresponding recesses (not shown) in the backside of carrier 1400 to help hold a stack of carriers together as an integrated unit. Alternately, or in addition to the protrusions 1404a, 1404b, and associated recesses, the carrier 1400 can be formed with a self-aligning lip 1450 that engages a corresponding recess (not shown) on the backside of carrier 1400 for the same purpose.

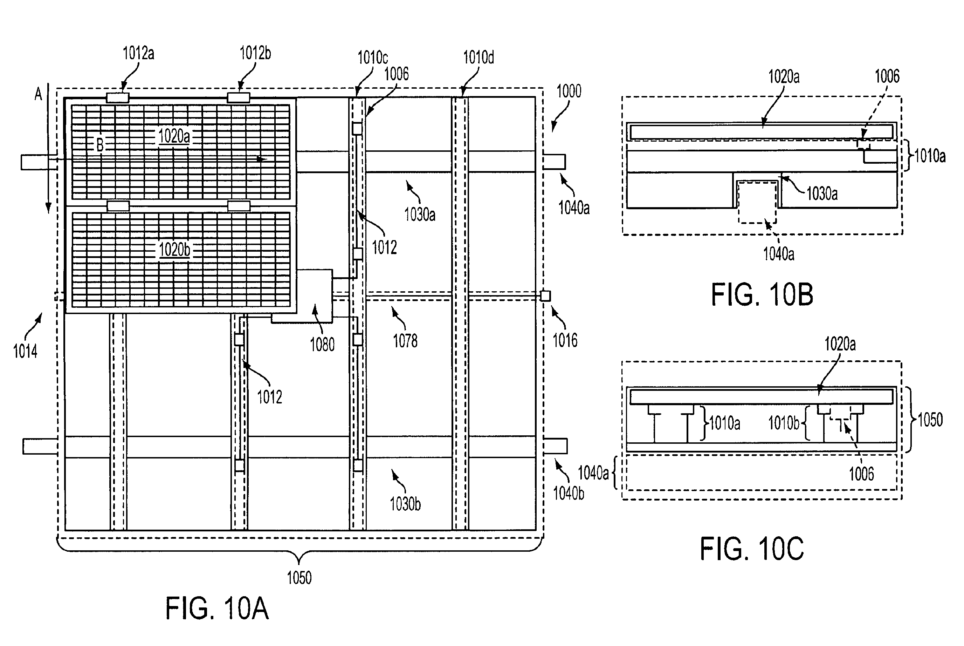

Figures 10A-10C show an embodiment in which carrier 1000 is constructed of a frame structure of spaced elongated members 1010a-d. The spaced elongated members 1010a-d are preferably formed in a U-shape with outwardly extending flanges on either top side. This shape is also known as a hat channel. Attachment structures 1030a-b are fastened transversely across and beneath the spaced elongated members 1010a-d for, as shown in Figure 10A, slidably connecting the carrier 1000 to support rails 1040a-b. Solar panels, *e.g.*, 1020a-b, are mounted on top of the spaced elongated members 1010a-d and secured by clips 1012a-b or other fastener to the elongated members 1010a-d. As with the FIG. 1-5 embodiment, glue, Velcro™, or other Dnown engagement means can be used to secure the solar panels 1020a-d to the spaced elongated members 1010a-d. An optional exterior rim 1050, shown in dotted lines in Figure 10A, is fit around the outside of the carrier and fastened to the ends of both the spaced elongated members 1010a-d and attachment structures 1030a-b. The optional exterior rim 1050 provides added structural support and also enables the carrier 1000 to be stacked with other carriers. Preferably, the spaced elongated members 1010a-d, solar panels 1020a-d, and attachment structures 1030a-b are all arranged within the dimension of the thickness of exterior rim 1050 so they do not project beyond a top or bottom surface of the rim 1050 of the carrier 1000, enabling stacking of carriers 1000.

Carrier 1000 is also equipped with a common bus system 1080. Wiring 1012 for the common bus system 1080 is run through the spaced elongated members 1010a-d. FIG. 10A shows a series of plugs 1006, for connecting the solar panels 1020a-d to the common bus system 280. The common bus system 1080, through a channel 1078 transversely mounted to the bottom of spaced elongated members 1010a-d, also has a plug 1014 and plug 1016 on opposite sides of the exterior rim 1050 of the carrier 1000 for electrically interconnecting adjacent carriers 1000.

FIG. 10B shows a side view of carrier 1000 along axis A of FIG. 10A, showing a solar panel 1020a mounted on spaced elongated member 1010a, along with attachment structure 1030a and rail 1040a. It should be understood that trucks, *e.g.*, 760, 960 can be mounted in attachment structure 1030a as well, and that attachment structure 1030a may be fitted with holes or screw threads (not shown) that can be used with fasteners, *e.g.*, screw 970 on truck 960 or fit with portions of the truck, *e.g.*, 760, 960 to secure and stabilize the truck within the attachment structure 1030aD. FIG. 10C shows a cross-section of carrier 1000 along axis B of FIG. 10B, showing solar panel 1020a mounted on spaced elongated members 1010a-b along with exterior rim 1050.

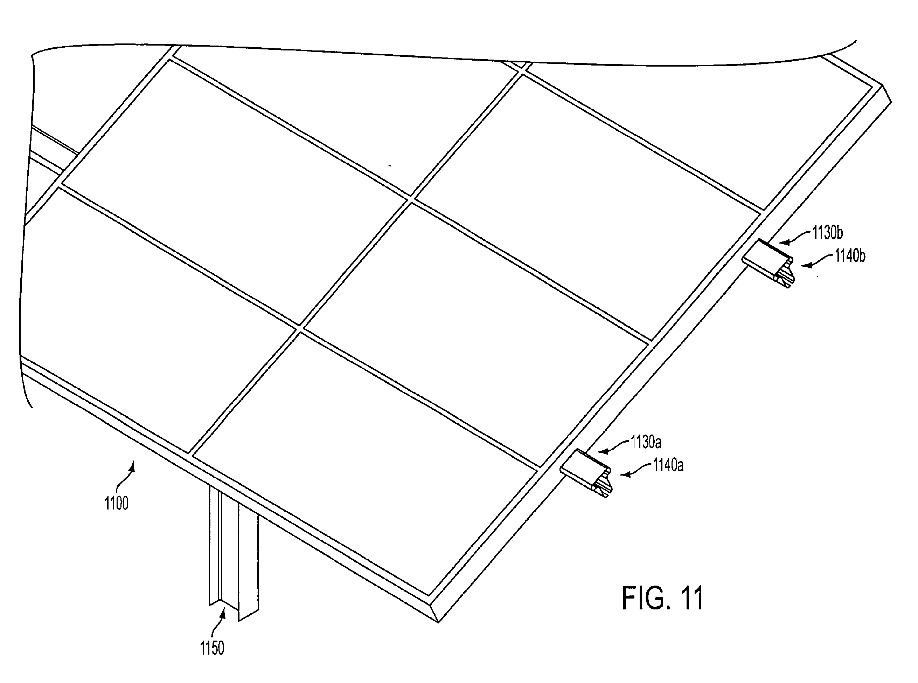

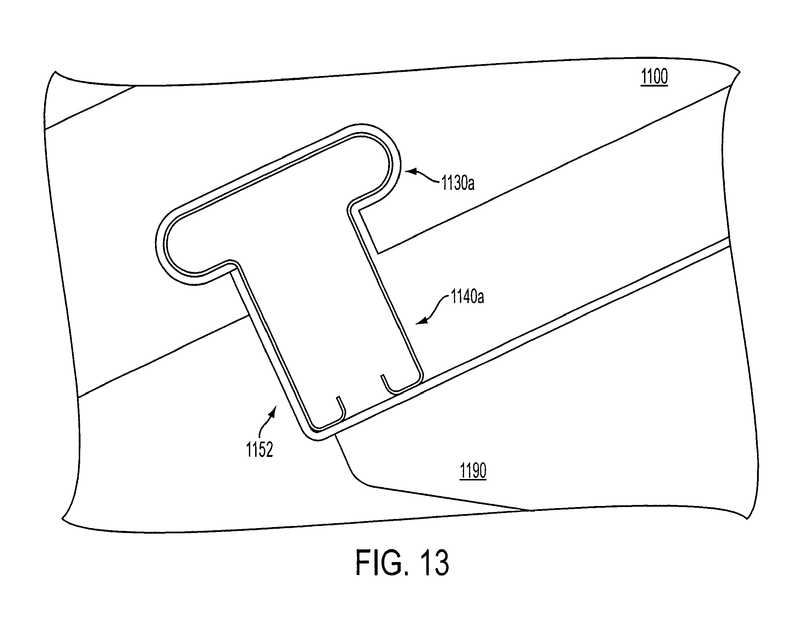

Figures 11-13 show another embodiment of a carrier 1100 that does not employ a truck. The cross sectional profile of the attachment structures 1130a-b, which are formed as grooves in the underside of carrier 1100, matches that of the rails 1140a-b, which are generally T-shaped in cross-section. Figures 12 and 13 show this embodiment in more detail. Rails 840a-b are mounted on a support table 1190 or other supporting structures, such that carrier 1100 is suspended above the table by the rails 840a-b. As can be seen in Figure 11, the rails 1140a-b are transversely mounted to flange 1152 on the table 1050. The rails 1140a-b themselves are hollow and can be compressed, which allows sliding of the carriers 1100 along the rails, and after the carriers 1100 are slid into place, provide resistance which holds the carriers 1100 to the rails 1140a-b. Figure 12 also shows that carrier 1100 is connected to an electrical harness 1192 on a support table post support structure 1150 via plug 1118, so that collected solar-generated electricity can be gathered and sent to a power grid.

Although the rails depicted in Figures 6A-9 and 11-13 have a generally T-shaped profile, it should be understood that another cross-sectional rail profile, *e.g*., circular or I-shaped, could be used. Further, it should be understood that although the mounting system described herein (*e.g.*, 601 shown in FIG. 6B) is generally used for ground mounted installations (as in FIG. 12), FIG. 15 shows an example of a mounting system 1501 for mounting a carrier 1500 on a roof structure.

Deployment of carriers may be accomplished by manually aligning the carriers on the ends of the rails and sliding them on the rails into position. Alternatively, a more automated carrier mounting and delivery system may be used at the end of each solar array row. One such delivery system is described in more detail in co-pending Application Serial No. 12/ , entitled "AUTOMATED INSTALLATION SYSTEM FOR AND METHOD OF DEPLOYMENT OF PHOTOVOLTAIC SOLAR PANELS, to John Bellacicco, Tom Kuster, Michael Monaco and Tom Oshman (attorney docket no. F4500.1002/P1002), filed concurrently with this application, the disclosure of which is incorporated by reference herein. Carriers can either be pushed or pulled down the row after repetitively sliding one after another onto rails, by means of a hydraulic piston or a winch and cable. Deployment of carriers at the end of each row reduces equipment and labor movement. Both rails and carriers are designed so the carriers can quickly be slid on the rails along the rows and moved into a final position. In this manner, each carrier mounts a plurality of solar panels (*e.g.*, eight, as shown in the Figures) at once to a set of rails, thereby simplifying installation time and cost. In addition, the carriers (*e.g.*, 100, 600, 700, 800, 900, 1000, 1100 and 1400) can be prewired to facilitate solar panel connections and the carriers themselves can plug into one another to further reduce installation labor.
According to other inventive aspects:
A mounting apparatus wherein the electrical connector is located in the bottom of each recessed area.
A mounting apparatus wherein the electrical connector is located in the sidewall of each recessed area.
A mounting apparatus wherein the spaced parallel rails are compressible to fit within the attachment structures.
A mounting apparatus wherein the attachment structure is configured to allow the carrier to slide along the spaced parallel rails.
A mounting apparatus wherein the attachment structure is on a bottom side of the carrier.
A mounting apparatus wherein the attachment structure comprises grooves on opposite edges of the carrier that slidably engage the spaced parallel rails.
A mounting apparatus wherein the grooves have a cross-sectional profile that corresponds to a cross-section profile of the spaced parallel rails.
A mounting apparatus wherein the attachment structure and spaced parallel rails are configured to allow the carrier to slide along the rails, but hold the carrier to the rails.
A mounting apparatus wherein the carrier is formed as a gridded structure.
A mounting apparatus wherein the carrier is formed as a honeycomb structure.
A mounting apparatus wherein the truck comprises a plurality of rollers spaced along the length of the truck.
A mounting apparatus wherein the truck comprises a plurality of ball bearings spaced along the length of the truck.
A mounting apparatus wherein the attachment structure comprises a non-stick surface that permits the carrier to slide along the spaced parallel rails.
A mounting apparatus wherein the spaced parallel rails have elongated tracks and the truck is configured to engage the tracks on the rails.
A mounting apparatus wherein the attachment structure further comprises a fastener for locking the carrier in position on the rails.
A mounting apparatus wherein the fastener also functions as an electrical connection.
A mounting apparatus wherein the electrical wiring is connectable to an electrical harness on the support structure.
A mounting apparatus wherein the electrical wiring is connected to an electrical connector on the carrier.
A mounting apparatus wherein the electrical connector is positioned so that the electrical wiring of adjacent carriers are electrically interconnected when adjacent carriers are pressed together.
A mounting apparatus wherein the carrier has a structure such that each solar panel mounted thereon is at a level below a topmost level of the carrier.
A mounting apparatus wherein the engagement mechanism comprises a lip groove in each recessed area for holding an edge of a solar panel and at least one clip for holding an opposing edge of the solar panel in the recessed area, the solar panel being held in the recessed area by the lip groove and clip.
A mounting apparatus wherein the at least one clip is fastenable to the carrier to hold a solar panel in place.
A mounting apparatus wherein the at least one clip is mounted on a carrier at an edge of a recessed area and overhangs the edge of the recessed area and is configured to be operable to push back as the solar panel is pressed down into the recessed area, then spring back over the solar panel to hold it in place once the solar panel has cleared a bottom surface of the clip.
A mounting apparatus wherein the engagement mechanism comprises resilient engagement members on opposite ends of a recessed area for holding solar panels within the recessed area.
A mounting apparatus further comprising a plurality of solar panels mounted on the carrier.
A mounting apparatus wherein the carrier has at least one opening therein to permit a plurality of carriers to be fastened together.
A mounting apparatus further comprising at least one protrusion on a top surface of the carrier and corresponding recess on a bottom surface of the carrier to facilitate stacking of carriers.
A method wherein the support structure comprises a plurality of a parallel rails and the attachment structures of the carrier slidably engages the rails.
The method wherein the step of installing the solar panels further comprises electrically connecting the plurality of solar panels on the carrier together with electrical connectors provided on the panels and carrier.
A solar panel carrier, comprising:
   a plurality of recesses for holding individual solar panels on the carrier; and
   an attachment structure for mounting the carrier to a support structure.
The solar panel carrier further including electrical connectors in each recess for connection with an electrical connector on each solar panel.
The solar panel carrier further including electrical wiring interconnecting the electrical connectors in each recess.
The solar panel carrier wherein the electrical wiring is connected to at least one electrical connector on an outer surface of the carrier positioned so that the electrical wiring of adjacent carriers can be electrically interconnected when adjacent carriers are pressed together.
The solar panel carrier wherein the support structure comprises parallel spaced rails and the attachment structure is configured to allow the carrier to slide along the rails.
The solar panel carrier wherein the attachment structure comprises at least one groove in a bottom side of the carrier.
The solar panel carrier further including at least one truck mounted in the groove.

While embodiments have been described in detail, it should be readily understood that the invention is not limited to the disclosed embodiments. Rather the embodiments can be modified to incorporate any number of variations, alterations, substitutions or equivalent arrangements not heretofore described. Although certain features have been described with some embodiments of the carrier, such features can be employed in other disclosed embodiments of the carrier as well. Accordingly, the invention is not limited by the foregoing embodiments, but is only limited by the scope of the appended claims.

## Claims

1. A solar panel mounting apparatus, comprising:
a carrier for holding a plurality of individual solar panels together as a unit; and
an attachment structure on the carrier for mounting the carrier to a support structure.

2. An apparatus as in claim 1, wherein the support structure comprises a plurality of spaced parallel rails.

3. An apparatus as in claim 1 or claim 2 wherein the carrier includes a plurality of recessed areas, each for holding at least one solar panel therein.

4. A mounting apparatus as in claim 3, wherein each recessed area has an associated engagement mechanism for engaging with a solar panel to hold it within the recessed area.

5. A mounting apparatus as in claim 3, wherein each of the recessed areas have an electrical connector therein for connection with an electrical connector on a solar panel.

6. A mounting apparatus as in any preceding claim, wherein the carrier further comprises electrical wiring for interconnecting solar panels installed thereon.

7. A mounting apparatus as in claim 2, wherein the attachment structure comprises a plurality of spaced grooves that slidably engage the spaced parallel rails.

8. A mounting apparatus as in claim 2, further including a truck mounted within the attachment structure that permits the carrier to slide along the spaced parallel rails.

9. A mounting apparatus as in claim 8 wherein the truck comprises a plurality of rollers spaced along the length of the truck.

10. A mounting apparatus as in claim 1, wherein the carrier comprises a series of spaced elongated members for holding at least one row of solar panels, the spaced elongated members being connected by the attachment structure.

11. A mounting apparatus as in claim 10 wherein the solar panels are mounted on top of the spaced elongated members and secured by clips.

12. A method for mounting solar panels, the method comprising:
installing a plurality of solar panels on a carrier; and
mounting the carrier to a support structure.

13. A method as in claim 12 wherein said mounting comprises:
providing attachment structures on the carriers that permit the carrier to slide along the support structure; and
sliding the carrier relative to the support structure to install the carrier at a desired position on the support structure.

14. The method of claims 12 or 13, further comprising repeating the installing and mounting steps for a plurality of carriers one after another onto the support structure.

15. The method of any of claims 12 to 14 wherein the step of installing the solar panels further comprises electrically connecting the plurality of solar panels on the carrier together with electrical connectors provided on the panels and carrier.
